# EUROPEAN PATENT APPLICATION

(11) **EP 2 698 728 A2**
(43) Date of publication of application: **19.02.2014**
(21) Application number: 11777282.2
(22) Date of filing: 07.07.2011
(51) Int. Cl.: G06F 17/30

(54) **METHOD AND DEVICE FOR AUTOMATIC DISPLAY OF APPLICATIONS ON HOME SCREEN**

(71) Applicant: Huawei Device Co., Ltd., Longgang District Shenzhen Guangdong 518129 (CN)
(72) Inventor: DENG, Junjie, Shenzhen Guangdong 518129 (CN); WANG, Hongjun, Shenzhen Guangdong 518129 (CN)
(74) Representative: Körber, Martin Hans
(86) International application number: PCT/CN2011/076956
(87) International publication number: WO 2011/137863

(57) **Abstract**

Embodiments of the present invention relate to the field of electronic communications, and in particular, to a method and a device for automatically displaying an application component on a desktop. In the method and the device that are provided by the embodiments of the present invention, a mobile terminal collects preset information first; matches the collected information with scenario information in a scenario saved by the terminal; and when the collected information matches scenario information in a scenario saved by the terminal, automatically displays an application component in the scenario on a desktop. Therefore, the process of manually searching for an application component by a user is omitted, thereby solving the problem that operations of starting an application component are complex and the operations are time-consuming. Therefore, the method and the device that are provided by the embodiments of the present invention can realize automatic display of an application component on a desktop, so that a terminal automatically displays an application component in a scenario corresponding to currently collected information on the desktop, and a user can directly start a corresponding application component on the desktop, thereby simplifying operations of starting the application component and saving time for the operations.

## Description

### TECHNICAL FIELD

Embodiments of the present invention relate to the field of electronic communications, and in particular, to a method and a device for automatically displaying an application component on a desktop.

### BACKGROUND

With the popularity of smartphones, mobile terminal users may install various application components on mobile terminals at will, and the application components here may at least include an application program and/or a widget (widget); this brings a problem that the more application components are installed, the harder to find a wanted application component among the numerous application components and the more time is needed. At present, a user generally may customize a desktop of a mobile terminal, and then place certain application components and/or widgets on the customized desktop. In a certain situation, by means of finding a wanted application component on the customized desktop, the wanted application component of the user can be found in a relatively convenient manner. However, when too many application components are placed on a desktop or too many desktops are customized, the user still needs to spend some time in finding the location of a wanted application component on the desktop or find out which desktop the application component is on, and to find some application components that are not on the desktops, it is still needed to access deep paths. Therefore, the problem that operations of starting an application component are complex and the operations are time-consuming exists.

### SUMMARY

Embodiments of the present invention, in one aspect, provide a method for automatically displaying an application component on a desktop, and in the other aspect, provide a device that supports automatic display of an application component on a desktop, which can solve the problem that operations of starting an application component are complex and the operations are time-consuming.

To achieve the preceding objective, the embodiments of the present invention adopt the following technical solutions:

A method for automatically displaying an application component on a desktop, including: collecting preset information, where the preset information is terminal-related information that is preset and needs to be monitored by a terminal; matching the collected information with scenario information in a scenario saved by the terminal, where each scenario includes scenario information and an application component, and when there is a plurality of scenarios, different scenarios have different scenario information; and when the collected information matches scenario information in a scenario saved by the terminal, automatically displaying an application component in the scenario on the desktop.

A mobile terminal, including: a collecting module, configured to collect preset information, where the preset information is information that is preset and needs to be monitored by the terminal; a saving module, configured to save a scenario, where the scenario includes scenario information and an application component, and when there is a plurality of scenarios, different scenarios have different scenario information; a matching module, configured to match the information collected by the collecting module with scenario information in a scenario saved by the saving module; and a displaying module, configured to: when a matching result of the matching module is that the information collected by the collecting module matches scenario information in a scenario saved by the terminal, automatically display an application component in the scenario matched by the matching module on a desktop.

In the method and the device that are provided by the embodiments of the present invention, a mobile terminal collects preset information first; matches the collected information with scenario information in a scenario saved by the terminal; and when the collected information matches scenario information in a scenario saved by the terminal, automatically displays an application component in the scenario on a desktop. Therefore, the process of manually searching for an application component by a user is omitted, thereby solving the problem that operations of starting an application component are complex and the operations are time-consuming. Therefore, the method and the device that are provided by the embodiments of the present invention can realize automatic display of an application component on a desktop, so that a terminal automatically displays an application component in a scenario corresponding to currently collected information on the desktop, and a user can directly start a corresponding application component on the desktop, thereby simplifying operations of starting the application component and saving time for the operations.

### BRIEF DESCRIPTION OF DRAWINGS

To illustrate the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for automatically displaying an application component on a desktop according to an embodiment of the present invention;
FIG. 2 is a flowchart of another method for automatically displaying an application component on a desktop according to an embodiment of the present invention;
FIG. 3 is a schematic structural diagram of a terminal according to an embodiment of the present invention;
FIG. 4 is a schematic structural diagram of another terminal according to an embodiment of the present invention; and
FIG. 5 is a schematic structural diagram of still another terminal according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiment of the present invention without creative efforts shall fall within the protection scope of the present invention.

### Embodiment 1

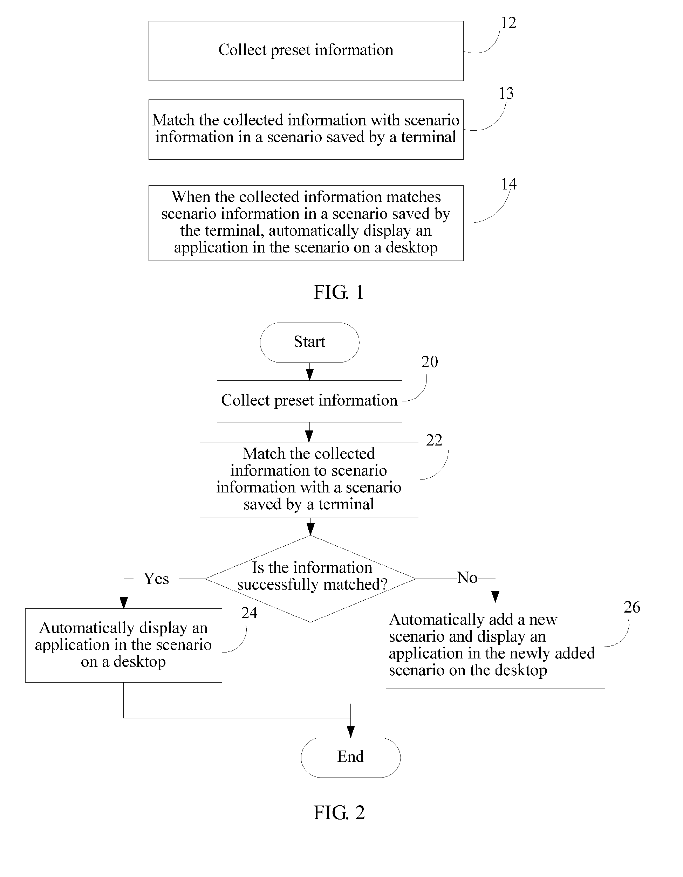

An embodiment of the present invention provides a method for automatically displaying an application component on a desktop. As shown in FIG. 1, the method steps include:

Step 12: Collect preset information, where the preset information is terminal-related information that is preset and needs to be monitored by a terminal.

The preset information may include one or a combination of more of a geographical location, time, a date, a moving situation of the terminal, and a brightness situation of an environment where the terminal is located. For a specific example, a combination of the geographical location, the time, and the date may be used as the preset information, and in this case, the terminal collects three values, the geographical location, the time, and the date; the moving situation of the terminal may also be used as the preset information, and in this case, the terminal collects one value, the moving situation of the terminal; a combination of the geographical location, the time, the date, and the brightness situation of the environment where the terminal is located may also be used as the preset information, and in this case, the terminal collects four values, the geographical location, the time, the date, and the brightness situation of the environment where the terminal is located.

Step 13: Match the collected information with scenario information in a scenario saved by the terminal, where each scenario includes scenario information and an application component, and when there is a plurality of scenarios, different scenarios have different scenario information.

It should be noted that, by default, the preset information is used as the scenario information in the scenario saved by the terminal. Therefore, in a default situation, the number of pieces of the collected information is consistent with the number of pieces of the scenario information in the scenario saved by the terminal. However, there is an exception, that is, the embodiment of the present invention allows a user to delete part of information that is not needed in the scenario information, so in the situation where the user has deleted part of the scenario information, the number of pieces of the collected information is not consistent with the number of pieces of the scenario information in the scenario. During matching, if no information corresponding to the collected information is found in the scenario information, the matching of the information is neglected and matching for other information is performed.

Further, time is a constantly changing value. If the scenario information uses time as an identifier of a scenario, a great number of invalid scenarios will be generated. Therefore, time in the scenario information may be changed to time intervals in an implementation process. When the collected time falls into a time interval in the scenario information, it is considered that the time matches.

Step 14: When the collected information matches scenario information in a scenario saved by the terminal, automatically display an application component in the scenario on a desktop.

In the method and the device that are provided by the embodiments of the present invention, a mobile terminal collects preset information first; matches the collected information with scenario information in a scenario saved by the terminal; and when the collected information matches scenario information in a scenario saved by the terminal, automatically displays an application component in the scenario on a desktop. Therefore, the process of manually searching for an application component by a user is omitted, thereby solving the problem that operations of starting an application component are complex and the operations are time-consuming. Therefore, the method and the device that are provided by the embodiments of the present invention can realize automatic display of an application component on a desktop, so that a terminal automatically displays an application component in a scenario corresponding to currently collected information on the desktop, and a user can directly start a corresponding application component on the desktop, thereby simplifying operations of starting the application component and saving time for the operations.

### Embodiment 2

An embodiment of the present invention provides another method for automatically displaying an application component on a desktop. As shown in FIG. 2, the method steps include:

Step 20: Collect preset information, where the preset information is terminal-related information that is preset and needs to be monitored by a terminal.

Content included in the preset information has been described in Embodiment 1, and will not be described in detail herein.

It should be noted that, the terminal may collect the preset information in real time, so that the terminal can promptly perceive that the terminal leaves a current scenario and enters another scenario, then the terminal further starts scenario matching and display of an application component in a corresponding scenario, thereby realizing that the terminal automatically completes the display of the application component in the corresponding scenario without manual intervention; or the terminal may periodically collect the preset information according to a fixed time interval; or the terminal may start collecting the preset information after a certain triggering condition is met, for example, if the geographical location changes, collect the preset information.

Further, the geographical location information may be obtained through a GPS (Global Positioning System), a base station, or a WiFi (wireless fidelity) access point; the moving situation of the terminal may be obtained by using an acceleration sensor in a cell phone, that is, the acceleration sensor in the cell phone may be used to obtain whether the terminal is currently in a moving state; the brightness situation of the environment where the terminal is located may be obtained by using an ambient light sensor in the cell phone.

Step 22: Match the collected information with scenario information in a scenario saved by the terminal.

In step 22, the collected information is matched with the scenario information in the scenario saved by the terminal, where each scenario includes scenario information and an application component, and when there is a plurality of scenarios, different scenarios have different scenario information. The scenario saved by the terminal may be a scenario preset in the terminal, or a scenario manually set by a user, or a scenario automatically saved by the terminal according to changes of a scenario in an implementation process.

It should be noted that, in the embodiment of the present invention, the scenario information in the automatically saved scenario completely corresponds to the preset information. However, when the user manually adds a scenario, the user is allowed to delete part of information that is not needed in the scenario information. Therefore, in the situation where the user has deleted part of the scenario information, the collected information partially corresponds to the scenario information in the scenario. During matching, if no information corresponding to the collected information is found in the scenario information, the collected information is neglected and matching for other information is performed. For example, when the collected information is matched with scenario information in scenario A saved by the terminal, the collected information may be matched with a corresponding part of scenario information in scenario A. If the number of pieces of the collected information is greater than the number of pieces of the scenario information in the scenario, corresponding to the scenario information in the scenario saved by the terminal, the excessive part of the collected information is not considered as a matching object. For example, scenario A includes three pieces of information: a geographical location, a time interval, and a date, and the collected scenario information includes four pieces of information: a geographical location, time, a date, and a brightness situation of an environment where the terminal is located, so that the collected brightness situation of the environment where the terminal is located is neglected, that is, obj ects involved in the matching are based on each piece of information of the scenario information saved by the terminal, and compared with the scenario information saved by the terminal, the excessive part of the collected information is neglected.

Further, when the collected information is the same as the corresponding part of the scenario information, it is determined that the collected information matches the corresponding part of the scenario information; or when the collected information falls into an interval range of the corresponding part of the scenario information, it is determined that the collected information matches the corresponding part of the scenario information. During matching with scenario A saved by the terminal, if a piece of information in the collected information does not match the corresponding part in the information in scenario A, it is determined that the collected information does not match the scenario information saved by the terminal; otherwise, if the collected information matches the corresponding part in information in scenario A, it is determined that the collected information matches the scenario information saved in the terminal. It should be noted that, when there is a plurality of scenarios that match the collected information, a scenario that matches the collected information may be selected at random as a matched scenario; or a scenario that matches the collected information and has the fewest pieces of scenario information may be selected as matched scenario.

Further, when a collected geographical location is exactly the same as the geographical location in the scenario saved by the terminal, it may be determined that the collected geographical location matches the geographical location in the scenario saved by the terminal; or the collected geographical location is within a fixed range of the geographical location in the scenario saved by the terminal, that is, the collected geographical location matches the geographical location in the scenario saved by the terminal, where the specific range may be set at will as needed, for example, 500 meters or 1 kilometer, and is not specifically limited in the embodiment of the present invention.

Further, when collected current system time of the terminal falls into a time interval in the scenario information saved by the terminal, it is determined that the collected current system time of the terminal matches the time interval in the scenario information saved by the terminal.

When the collected information matches scenario information in a scenario saved by the terminal, step 24 is executed to automatically display an application component in the scenario on a desktop. When the collected information does not match scenario information in all scenarios saved by the terminal, step 26 is executed to automatically add a new scenario and display an application component in the newly added scenario on the desktop.

Step 24: When there is a scenario that matches the collected information in the scenario saved by the terminal, automatically display an application component in the scenario on a desktop.

The automatically displaying an application component in the scenario on a desktop may specifically be: automatically displaying part of the application component in the scenario on the desktop, or automatically displaying all the application components in the scenario on the desktop.

A relative location of the application component may be based on a frequency at which the user uses the application component. The more frequently an application component is used by the user, the more ahead a relative location of the application component is. It should be noted that, the embodiment of the present invention provides relative locations between the application components instead of absolute locations of the application components. A location of an application component finally displayed on the desktop is determined by a system. Sequence of displaying the application components by the system may be from top to bottom or from left to right. The relative locations and the sequence of displaying the application components by the system codetermine the locations of the application components on the desktop.

Further, if the scenario further includes the number of using times of the application component, the relative location of the application component may be determined in the following manner: in the scenario that matches the collected information, selecting one or more application components based on a descending order of the numbers of using times of the application components. For example, the application components in the scenario that matches the collected information and the numbers of using times of the application components are as follows: application component 1-number of using times being 10, application component 2-number of using times being 8, and application component 3-number of using times being 6, so that the relative locations of the application components finally displayed on the desktop are application component 1, application component 2, and application component 3. However, the relative locations are determined based on the number of using times, that is, the relative locations are updated according to the numbers of times that the user uses the application components. For example, after a period of time, the numbers of using times of the application components are refreshed as follows: application component 3-number of using times being 20, application component 2-number of using times being 8, and application component 3-number of using times being 6. Then the relative locations of the application components change to application component 3, application component 1, and application component 2. Therefore, when the terminal enters this scenario again, actual locations of application components displayed on the desktop correspondingly change. In addition, when the numbers of using times of a plurality of application components are the same, one or more of the application components may be selected at random to be displayed on the desktop. Selecting one or more application components based on the descending order of the numbers of using times of the application components and automatically displaying the selected application components on the desktop may enable the terminal to preferably display application components that are frequently used by the user in a corresponding scenario, so that the automatically displayed application components better meet a demand of the user.

In addition, an upper limit value for the number of the displayed application components may be further set, that is, the terminal enters the corresponding scenario, and the maximum number of application components that may be displayed on the desktop is the upper limit value; the numbers of using times of the application components are arranged in a descending order, and the application components that are arranged after the upper limit value are not displayed. For example, if the upper limit value is 4, application components after first four application components are not displayed. The application components may also be displayed on different screens: displaying application components that are arranged after a fixed number of application components on a next screen. For example, if the upper limit value is 4 and there are 10 application components in the scenario, the application components in the scenario are displayed finally on 3 screens.

It should be noted that, an application component frequently used by the user may also be displayed in a fixed zone on the desktop to be used as a permanently displayed application component on the desktop, so as to meet a daily using demand of the user. For example, four frequently used application components, call, short message, browser, and music application components, are always displayed at fixed locations on the desktop, that is, no matter how a scenario change and how an application component in a scenario changes, the four application components are always displayed on the fixed locations on the desktop. Meanwhile, the user may also change the preset application components that are always displayed.

Step 26: When the collected information does not match scenario information in all scenarios saved by the terminal, automatically add a new scenario, and then an application component in the newly added scenario may be automatically displayed on the desktop.

When the new scenario is automatically added in step 26, scenario information and an application component in the scenario may be further set.

The setting scenario information in the scenario may specifically be: saving the collected information as the scenario information in the automatically newly added scenario. It should be noted that, if time in the scenario information is changed to a time interval, a time interval in the scenario information in the automatically newly added scenario may be set according to the following method: the time interval including beginning time and ending time, where multiple methods for setting the beginning time and the ending time exist:

Manner 1: A fixed time interval may be used to set the beginning time and the ending time. For example, time intervals, 7:00∼7:59, 8:00∼17:30, 17:31∼22:00, and 22:01∼7:00, are fixedly used as the time intervals, which are only examples for illustration here, may be specifically set or adjusted according to an actual need, and are not limited herein. Further, when a time interval is used, which time interval the detected system time falls into may be first determined, and then the time interval is used as the time interval of the scenario. For example, the information collected by the terminal is geographical location information: Huawei Industrial Base, Bantian, time: 09:00, date: Monday, a new scenario is automatically added, that is, the information collected by the terminal is saved into scenario information in the automatically newly added scenario 1 automatically newly added scenario automatically newly added scenario; therefore, the scenario information in the automatically newly added scenario 1 saved by the terminal is geographical location information: Huawei Industrial Base, Bantian, time interval using the fixed time interval: 08:00∼17:30 (9:00 falls into a default time interval of the terminal, 8:00∼17:30, so 8:00∼17:30 is used as the time interval of the newly added scenario 1), and date: Monday.

Manner 2: System time when a new scenario is created may be used as the beginning time, and the ending time may be calculated and obtained by using the beginning time and a fixed time period. The fixed time period may be 5 minutes, 30 minutes, 60 minutes, or the like. The fixed time period may be specifically set or adjusted according to an actual need and is not limited herein. For example, the system time when the new scenario is created is 10:00, so the beginning time in the scenario information is set to 10:00; the fixed time period is 60 minutes, so the ending time in the scenario is set to 11:00, and the time interval finally set in the scenario information is 10:00-11:00.

Manner 3: System time when a new scenario is created may also be used as the beginning time, and the ending time is set when a certain piece of scenario information in the scenario changes. For example, the ending time is set when a geographical location changes, that is, the ending time is set according to the time when the geographical location changes.

In addition, the setting an application component in the scenario may specifically be: setting the application component in the automatically newly added scenario to null, and then the application component in the automatically newly added scenario may be learned or updated in the process of using the terminal by the user; or selecting a scenario that has the highest similarity with the collected information in a scenario saved by the terminal, and saving an application component in the selected scenario into the automatically newly added scenario. In the plurality of scenarios saved by the terminal, a scenario that has the most pieces of scenario information that match the collected information is used as the scenario that has the highest similarity. For example, if the scenario that has the most pieces of scenario information that match the collected information is a scenario meeting-geographical information: Huawei Industrial Base, Bantian, time interval: 09:00-12:00, and date: Monday, an application component in the meeting scenario are saved into the automatically newly added scenario 1. At this time, by saving the application component in the selected scenario that has the highest similarity into the automatically newly added scenario, when the terminal is in the automatically newly added scenario 1, an application component that the user may concern may be displayed to the user.

By automatically adding the new scenario in step 26, the terminal may continuously update the scenario saved by the terminal, so that the terminal may store a situation of using the terminal by the user as much as possible. Therefore, the terminal may more intelligently display an application component in the scenario that meets a demand of the user.

Besides adding the new scenario by the terminal in step 26, the terminal may also add a new scenario according to input of the user, that is, save received scenario information input by the user as the scenario information in the newly added scenario, and save a received application component selected by the user as the application component in the newly added scenario. For example, the newly added scenario-a scenario name being meeting; application components in the scenario meeting-calendar, alarm, notes, and mail; scenario information in the scenario meeting-geographical location information: Huawei Industrial Base, Bantian, time interval: 09:00-12:00, and date: Monday. It should be noted that, scenario information in a manually added scenario may be inconsistent with scenario information in a scenario where the terminal is currently located and instead be set at random by the user based on habits of the user. In addition, when setting the scenario information in the newly added scenario, the user may delete any information in the scenario information at random based on personal preference and keep one or more pieces of information that the user wants. For example, if the user thinks that the geographical location may identify a scenario where the user is located, the user may keep the geographical location and delete the other information in the scenario. It should be note that, when the user manually adds the new scenario, the system needs to be set to determine that, if there has been a same scenario information in the terminal, the system reminds the user that the same scenario exists, and the user determines whether to add an application component in the existing scenario. By supporting the user to manually add a new scenario, the user may more flexibly add a new scenario based on an actual need of the user, and set an application component that the user wants to use in the scenario, so that an automatically displayed application component better meets a demand of the user.

In addition, the application component in the scenario saved by the terminal may be further refreshed according to a situation of using the application component by the user. The specific manner is as follows: when an instruction for invoking an application component is received, whether the invoked application component is in the scenario where the terminal is currently located may be further determined; and if the invoked application component is not in the scenario where the terminal is currently located, the invoked application component is saved into the scenario where the terminal is currently located; if the invoked application component is in the scenario where the terminal is currently located, the terminal performs normal operation of the application component.

Further, if the scenario further includes the number of using times of the application component, when the application component is saved in the scenario, the number of using times of the saved application component is initialized to 1. The numbers of using times of all the application components are automatically initialized by the system, and the initial value is set to 1 herein. The initial value may also be set to another value according to an actual need of the user and is not specifically limited in the embodiment of the present invention. If the invoked application component is in the scenario where the terminal is currently located, 1 is added to the number of using times of the application component in the scenario where the terminal is currently located. For example, the scenario where the terminal is currently located is the automatically and newly created scenario 1 and the user invokes notes and weather software successively. The terminal searches for the notes and weather software in the automatically and created added scenario 1, finds that the notes already exist, and then automatically adds 1 to the number of using times of the notes; if the terminal finds there is not the weather software, the terminal first adds the weather software in the application component in the automatically and newly created scenario 1, and then sets the number of using times of the weather software to 1. When updating the number of using times of the application component in the scenario saved by the terminal, it should be particularly noted that, for operating systems of some existing terminals, such as the android operating system, a user cannot control time for closing an application component; instead, when system resources are insufficient, the system automatically clears, according to a certain rule, an application component that is running in the background, and at this time the cleared application component is closed. For this type of operating systems, the manner of adding 1 to the number of using times of an application component in the scenario when the application component is started once cannot be used, because a situation where an application component is not closed and is used again exists; as a result, calculation of the number of using times of the application component is inaccurate. Specifically, a certain condition may be set to determine that the application component of the terminal is invoked. For example, when it is identified that an interface of the application component is displayed at the forefront of the screen or the user has operated the application component, it is determined that the application component is invoked. In conclusion, by updating the application component in the scenario saved by the terminal and the number of using times of the application component in a timely manner, the terminal may more accurately understand a situation of using the application component by the user, so that the automatically displayed application component better meets a demand of the user.

It should be noted that, when the new scenario is added, the specific execution sequence of saving the scenario information and saving the application component is not limited, that is, the scenario information may be saved first and the application component is saved next, or the application component may be saved first and the scenario information is saved next. In addition, how to save an application component into a scenario is a prior art and may be specifically realized in an xml manner and may also be realized in a database manner, and the specific implementation process will not be described in detail herein.

Based on the above, the terminal is in a scenario, and the application component in the scenario that matches the collected information is displayed on the desktop of the terminal. When it is detected that one piece or certain pieces of scenario information change, a next round of scenario matching and application component displaying starts.

In the method provided by the embodiment of the present invention, a mobile terminal collects preset information first; matches the collected information with scenario information in a scenario saved by the terminal; and when the collected information matches scenario information in a scenario saved by the terminal, automatically displays an application component in the scenario on a desktop. Therefore, the process of manually searching for an application component by a user is omitted, thereby solving the problem that operations of starting an application component are complex and the operations are time-consuming. Therefore, the method and the device that are provided by the embodiments of the present invention can realize automatic display of an application component on a desktop, so that a terminal automatically displays an application component in a scenario corresponding to currently collected information on the desktop, and a user can directly start a corresponding application component on the desktop, thereby simplifying operations of starting the application component and saving time for the operations.

### Embodiment 3

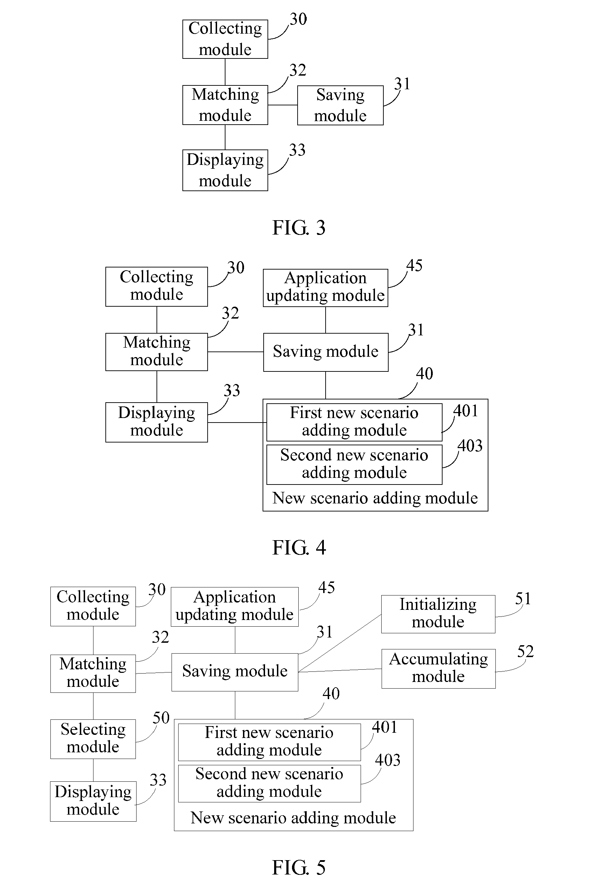

As shown in FIG. 3, an embodiment of the present invention provides a mobile terminal. The mobile terminal includes:
a collecting module 30, configured to collect preset information, where the preset information is terminal-related information that is preset and needs to be monitored by the terminal; a saving module 31, configured to save a scenario, where the scenario includes scenario information and an application component, and when there is a plurality of scenarios, different scenarios have different scenario information; a matching module 32, configured to match the information collected by the collecting module with scenario information in a scenario saved by the saving module 31; and a displaying module 33, configured to: when a matching result of the matching module 32 is that the information collected by the collecting module 30 matches scenario information in a scenario saved by the terminal, automatically display an application component in the scenario matched by the matching module 32 on a desktop.

In the method provided by the embodiment of the present invention, the collecting module 30 of the mobile terminal collects preset information first; the matching module 32 matches the collected information with scenario information in a scenario saved by the terminal; and when a matching result of the matching module 32 is that the information collected by the collecting module 30 matches scenario information in a scenario saved by the terminal, the displaying module 33 automatically displays an application component in the scenario on a desktop. Therefore, the process of manually searching for an application component by a user is omitted, thereby solving the problem that operations of starting an application component are complex and the operations are time-consuming. Therefore, the device provided by the embodiment of the present invention can realize automatic display of an application component on a desktop, so that a terminal automatically displays an application component in a scenario corresponding to currently collected information on the desktop, and a user can directly start a corresponding application component on the desktop, thereby simplifying operations of starting the application component and saving time for the operations.

### Embodiment 4

As shown in FIG. 4, an embodiment of the present invention provides another mobile terminal. The mobile terminal includes: a collecting module 30, configured to collect preset information, where the preset information is terminal-related information that is preset and needs to be monitored by the terminal; a saving module 31, configured to save a scenario, where the scenario includes scenario information and an application component, and when there is a plurality of scenarios, different scenarios have different scenario information; a matching module 32, configured to match the information collected by the collecting module 30 with scenario information in a scenario saved by the saving module 31; and a displaying module 33, configured to: when a matching result of the matching module 32 is that the information collected by the collecting module 30 matches scenario information in a scenario saved by the terminal, automatically display an application component in the scenario matched by the matching module 32 on a desktop.

Further, as shown in FIG. 4, the terminal further includes: a new scenario adding module 40, configured to add a new scenario in the terminal, where the new scenario adding module 40 includes: a first new scenario adding module 401, configured to: when the matching result of the matching module is that the information collected by the collecting module 30 does not match scenario information in all the scenarios saved by the saving module, automatically add a new scenario, send an application component in the scenario newly added by the first new scenario adding module 401 to the displaying module 33, so that the displaying module 33 automatically displays the application component in the newly added scenario on the desktop, and send the newly added scenario to the saving module 31, so that the saving module 31 saves the newly added scenario, where the collected information is saved as scenario information in the automatically newly added scenario, an application component in a scenario that has the highest similarity with the collected information is saved as the application component in the automatically newly added scenario, and the scenario that has the highest similarity with the collected information is a scenario that has the most pieces of scenario information that match the collected information; a second new scenario adding module 403, adding a new scenario according to input of a user and sending the newly added scenario to the saving module 31, so that the saving module 31 saves the newly added scenario, where received scenario information input by the user is saved as scenario information in the newly added scenario, and a received application component selected by the user is saved as the application component in the newly added scenario. In addition, the terminal further includes: an application component updating module 45, configured to: when an instruction for invoking an application component is received, save the invoked application component in a scenario where the terminal is currently located if the invoked application component is not in the scenario where the terminal is currently located.

Further, as shown in FIG. 5:

If the scenario further includes the number of using times of the application component, the mobile terminal further includes: an initializing module 51, configured to: when the application component is saved in the scenario, initialize the numbers of using times of the saved application component to 1; and an accumulating module 52, configured to: when the instruction for invoking an application component is received, if the invoked application component is in the scenario where the terminal is currently located, add 1 to the number of using times of the application component in the scenario where the terminal is currently located. In addition, the mobile terminal may further include: a selecting module 50, configured to: in the scenario matched by the matching module 32, select one or more of the application components based on a descending order of the numbers of using times of the application components, and send the selected application component to the displaying module, so that the displaying module 33 automatically displays the application component selected by the selecting module 50 on the desktop.

For operation steps of each module in this device embodiment, reference may be made to the corresponding content in Embodiment 1 and Embodiment 2, and for the effect that each of the operation steps may generate, reference may also be made to the corresponding content in Embodiment 1, which will not be described in detail herein.

It should be noted that, the first new scenario adding module 401 and the second new scenario adding module 403 may exist at the same time, and execution sequence of the two modules are not limited. That is to say, the first new scenario adding module 401 may be started first, and the second new scenario adding module 403 is started next; or the second new scenario adding module 403 may be started first, and the first new scenario adding module 401 is started next.

In the mobile terminal provided by the embodiment of the present invention, the collecting module 30 of the mobile terminal collects preset information first; the matching module 32 matches the collected information with scenario information in a scenario saved by the saving module 31; and when a matching result of the matching module 32 is that the information collected by the collecting module 30 matches scenario information in a scenario saved by the saving module 31, the displaying module 33 automatically displays an application component in the scenario on a desktop. Therefore, the process of manually searching for an application component by a user is omitted, thereby solving the problem that operations of starting an application component are complex and the operations are time-consuming. Therefore, the device provided by the embodiment of the present invention can realize automatic display of an application component on a desktop, so that a terminal automatically displays an application component in a scenario corresponding to currently collected information on the desktop, and a user can directly start a corresponding application component on the desktop, thereby simplifying operations of starting the application component and saving time for the operations.

The foregoing descriptions are merely specific embodiments of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

In Embodiment 1 of the present invention to Embodiment 4 of the present invention, the mobile terminal may be a mobile phone, a navigator, a human computer interaction terminal, an electronic book, an audio video player, a personal digital assistant PDA, or other devices, or any other terminal device that has a displaying function, but is not limited to the foregoing devices. For example, when the mobile terminal is a mobile phone, that is, a cell phone, the cell phone may include the following components: a shell, a circuit board, a processor, a touchscreen, a radio frequency circuit, a microphone, a loudspeaker, a power supply, and so on. The touchscreen is placed on the shell, the circuit board is placed in a space enclosed by the shell, and the processor and the radio frequency circuit are set on the circuit board. In addition, the processor includes the collecting module 30, the saving module 31, the matching module 32, the displaying module 33, the new scenario adding module 40, and the application component updating module 45 in Embodiment 1 of the present invention to Embodiment 4 of the present invention; and if the scenario further includes the number of using times of the application component, the processor further includes the selecting module 50, the initializing module 51, and the accumulating module 52. Specifically, the processor is configured to process data input through the touchscreen, and/or output a processed data result through a display screen. The radio frequency circuit is configured to establish communication between the cell phone and a wireless network and realize data receiving and sending between the cell phone and the wireless network. The microphone is configured to collect voice and convert the collected voice into voice data, so that the cell phone sends the voice data to the wireless network through the radio frequency circuit. The loudspeaker is configured to change the voice data received, through the radio frequency circuit, by the cell phone from the wireless network back into voice and play the voice to the user. The power supply is configured to supply power for each circuit or component of the cell phone.

It should be noted that, in the method and mobile terminal embodiments, all the included units are divided based on function logic, but the present invention is not limited to the preceding division as long as corresponding functions can be implemented. In addition, the specific names of functional units are used to distinguish each other only but are not used to limit the protection scope of the present invention.

It should also be noted that, even though the document may use terms such as first, second, and so on to describe various components or data, these components or data are not limited to the terms. These terms are used only to distinguish the components or data. For example, without departing from the scope of the present invention, a first module may also be called a second module, and similarly, a second module may be called a first module.

A person of ordinary skill in the art may understand that, all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a read-only memory (Read-Only Memory, ROM), a random access memory (Random Access Memory, RAM), or the like.

To sum up, the above descriptions are merely exemplary embodiments of the present invention, but are not intended to limit the protection scope of the present invention. Any modification, equivalent replacement, or improvement made within the spirit and principle of the present invention shall fall within the protection scope of the present invention.

## Claims

1. A method for automatically displaying an application component on a desktop, comprising:
collecting preset information, wherein the preset information is terminal-related information that is preset and needs to be monitored by a terminal;
matching the collected information with scenario information in a scenario saved by the terminal, wherein each scenario comprises scenario information and an application component, and when there is a plurality of scenarios, different scenarios have different scenario information; and
when the collected information matches scenario information in a scenario saved by the terminal, automatically displaying an application component in the scenario on the desktop.

2. The method according to claim 1, wherein, the preset information comprises one or a combination of more of a geographical location, time, a date, a moving situation of the terminal, and a brightness situation of an environment where the terminal is located.

3. The method according to claim 1 or 2, wherein, when the collected information does not match scenario information in all scenarios saved by the terminal, the method further comprises:
automatically adding a new scenario and displaying an application component in the newly added scenario on the desktop, wherein the collected information is saved as scenario information in the automatically newly added scenario, an application component in a scenario that has the highest similarity with the collected information is saved as an application component in the automatically newly added scenario, and the scenario that has the highest similarity with the collected information is a scenario that has the most pieces of scenario information that match the collected information.

4. The method according to claim 1 or 2, further comprising:
adding a new scenario according to input of a user, wherein received scenario information input by the user is saved as scenario information in the newly added scenario, and a received application component selected by the user is saved as an application component in the newly added scenario.

5. The method according to any one of claims 1 to 4, further comprising:
when an instruction for invoking an application component is received, saving the invoked application component in a scenario where the terminal is currently located if the invoked application component is not in the scenario where the terminal is currently located.

6. The method according to any one of claims 1 to 5, wherein the scenario further comprises the number of using times of the application component and the method further comprises:
when the application component is saved in the scenario, initializing the number of using times of the saved application component to 1; and
when the instruction for invoking an application component is received, if the invoked application component is in the scenario where the terminal is currently located, adding 1 to the number of using times of the application component in the scenario where the terminal is currently located.

7. The method according to claim 6, wherein the automatically displaying an application component in the scenario that matches the collected scenario information on the desktop comprises:
in the scenario the matches the collected information, selecting one or more application components based on a descending order of the numbers of using times of the application components and automatically displaying the selected application component on the desktop.

8. A mobile terminal, comprising:
a collecting module, configured to collect preset information, wherein the preset information is information that is preset and needs to be monitored by the terminal;
a saving module, configured to save a scenario, wherein the scenario comprises scenario information and an application component, and when there is a plurality of scenarios, different scenarios have different scenario information;
a matching module, configured to match the information collected by the collecting module with scenario information in a scenario saved by the saving module; and
a displaying module, configured to: when a matching result of the matching module is that the information collected by the collecting module matches scenario information in a scenario saved by the terminal, automatically display an application component in the scenario matched by the matching module on a desktop.

9. The mobile terminal according to claim 8, further comprising: a new scenario adding module, configured to add a new scenario in the terminal.

10. The mobile terminal according to claim 9, wherein the new scenario adding module comprises:
a first new scenario adding module, configured to: when the matching result of the matching module is that the information collected by the collecting module does not match scenario information in all the scenarios saved by the saving module, automatically add a new scenario, send an application component in the scenario newly added by the first new scenario adding module to the displaying module, so that the displaying module automatically displays the application component in the newly added scenario on the desktop, and send the newly added scenario to the saving module, so that the saving module saves the newly added scenario, wherein the collected information is saved as scenario information in the automatically newly added scenario, an application component in a scenario that has the highest similarity with the collected information is saved as the application component in the automatically newly added scenario, and the scenario that has the highest similarity with the collected information is a scenario that has the most pieces of scenario information that match the collected information; and
a second new scenario adding module, adding a new scenario according to input of a user and sending the newly added scenario to the saving module, so that the saving module saves the newly added scenario, wherein received scenario information input by the user is saved as scenario information in the newly added scenario, and a received application component selected by the user is saved as an application component in the newly added scenario.

11. The mobile terminal according to any one of claims 8 to 10, further comprising:
an application component updating module, configured to: when an instruction for invoking an application component is received, save the invoked application component in a scenario where the terminal is currently located if the invoked application component is not in the scenario where the terminal is currently located.

12. The mobile terminal according to any one of claims 8 to 11, wherein, when each scenario further comprises the number of using times of the application component, the mobile terminal further comprises:
an initializing module, configured to: when the application component is saved in the scenario, initialize the number of using times of the saved application component to 1; and
an accumulating module, configured to: when the instruction for invoking an application component is received, if the invoked application component is in the scenario where the terminal is currently located, add 1 to the number of using times of the application component in the scenario where the terminal is currently located.

13. The mobile terminal according to claim 12, wherein
the mobile terminal further comprises: a selecting module, configured to: in the scenario matched by the matching module, select one or more of the application components based on a descending order of the numbers of using times of the application components, and send the selected application component to the displaying module, so that the displaying module automatically displays the application component selected by the selecting module on the desktop.

14. The mobile terminal according to any one of claims 9 to 13, wherein the mobile terminal is a cell phone and the cell phone further comprises: a shell, a circuit board, a processor, a touchscreen, a radio frequency circuit, a microphone, a loudspeaker, and a power supply, wherein
the touchscreen is placed on the shell, the circuit board is placed in a space enclosed by the shell, and the processor and the radio frequency circuit are set on the circuit board;
the processor comprises all or part of the modules, and the processor is configured to process data input through the touchscreen, and/or output a processed data result through the touchscreen;
the radio frequency circuit is configured to establish communication between the cell phone and a wireless network and realize data receiving and sending between the cell phone and the wireless network;
the microphone is configured to collect voice and convert the collected voice into voice data, so that the cell phone sends the voice data to the wireless network through the radio frequency circuit;
the loudspeaker is configured to change the voice data received, through the radio frequency circuit, by the cell phone from the wireless network back into voice and play the voice to the user; and
the power supply is configured to supply power for each circuit or component of the cell phone.
